# EUROPEAN PATENT APPLICATION

(11) **EP 4 365 853 A1**
(43) Date of publication of application: **08.05.2024**
(21) Application number: 22205562.6
(22) Date of filing: 04.11.2022
(51) Int. Cl.: G06V 10/10, G06V 20/56, G06V 10/82, G06V 10/774

(54) **METHOD FOR DETECTING AN OBJECT IN AN IMAGE**

(71) Applicant: Continental Automotive Technologies GmbH, 30175 Hannover (DE)
(72) Inventor: Keser, Mert, 90411 Nürnberg (DE); Schwalbe, Gesina, 90411 Nürnberg (DE)
(74) Representative: Continental Corporation

(57) **Abstract**

The invention relates to a computer-implemented method for detecting an object in an image provided by a camera of a vehicle or in an image section of such image using an artificial neural network.

The method comprises the steps of:
- Providing an image of a camera of a vehicle or an image section of such image to a prefilter (2) (S10), the prefilter (2) adapting image information included in the image or image section in order to provide output image information which is invariant with respect to image recording conditions (S11);
- Providing output image information of the prefilter (2) to a concept extractor unit (3), the concept extractor unit (3) including an artificial neural network which establishes human-interpretable concept information of an object included in output image information, wherein the human-interpretable concept information comprises information if a set of object attributes is fulfilled by the object (S12);
- Providing human-interpretable concept information to an object detection unit (4), the object detection unit (4) including an artificial neural network which provides information regarding an object included in the image or image section based on human-interpretable concept information (S13).

## Description

The present invention relates generally to the field of object detection using artificial neural networks. More specifically, the invention relates to a method for detecting an object in an image provided by a camera of a vehicle or in an image section of such image using an artificial neural network and a method for training an object detection system using at least two artificial neural networks.

In automated driving, deep neural networks are the state-of-the-art for environment perception functions, in particular object detection, which use camera images or input from other types of sensors. However, these deep neural networks are opaque, i.e., hard to debug, review, or correct. In other words, a trained deep neural network does not allow for insights into what concepts have been learned and why a certain output has been provided by the deep neural network.

In order to get insights which concepts have been learned by the neural network, so-called Concept Bottleneck Models (CBM) (Koh, P. W., Nguyen, T., Tang, Y. S., Mussmann, S., Pierson, E., Kim, B., & Liang, P. (2020, November). CBMs. In International Conference on Machine Learning (pp. 5338-5348)) were introduced. The document teaches to intercept a standard DNN architecture with a layer, called the concept bottleneck layer, in which each neuron is then trained to coincide with a human-interpretable concept. A concept refers to an object attribute describing the object in natural language and is therefore interpretable for a human. The document discloses a two-step approach: First map an input to predictions about human-interpretable concept, and then make the final prediction from the concept information. This allows to obtain human-interpretable insights into what concepts were learned, to enforce concept learning during training, and, during inference, to assess for input instances which concepts were found by the DNN and intervene with those findings.

However, the teaching of Koh et al. is not ready for being directly applied to images captured by a vehicle camera in automotive environments because the proposed method is not robust with respect to domain shifts like different colors, different lighting conditions etc. In addition, concept training needs a high-densely labeled training dataset including images of automotive driving scenes which is mostly not available.

It is an objective of the embodiments of the invention to disclose a method for detecting an object in an image which allows an assessment and debugging of predictions made by the neural network, and which is applicable in automotive environments.

The objective is solved by the features of the independent claims. Preferred embodiments are given in the dependent claims. If not explicitly indicated otherwise, embodiments of the invention can be freely combined with each other.

According to an aspect, the invention refers to a computer-implemented method for detecting an object in an image provided by a camera of a vehicle or in an image section of such image using an artificial neural network. The artificial neural network may be a convolutional deep neural network. The method comprises the following steps:
First, an image of a camera of a vehicle or an image section of such image is provided to a prefilter. The prefilter adapts image information included in the image or image section in order to provide output image information which is invariant with respect to image recording conditions. Preferably, the prefilter is configured to provide output image information which emphasizes photometric invariant features, specifically edges of an object included in the image in order to mitigate detection performance loss due to different color and/or different lighting conditions. Examples for such filters providing some degree of invariance could be standard filters for robustness against illumination changes, derived from physics-based reflection models, such as used in Zero-Shot Day-Night Domain adaptation with a Physics Prior (Lengyel A., Garg S., Milford M., van Gemert J. C.) (2021), Proceedings of the IEEE/CVF International Conference on Computer Vision, p.4379-4389.

The output image information of the prefilter is then provided to a concept extractor unit. The concept extractor unit includes an artificial neural network which establishes human-interpretable concept information of an object included in output image information. The human-interpretable concept information comprises information whether a set of object attributes is fulfilled by the object. Thus, based on the human-interpretable concept information it is possible to recognize what object features have been detected by the neural network, which allows to draw conclusions regarding the training state of the neural network.

Finally, the human-interpretable concept information is provided to an object detection unit. The object detection unit includes an artificial neural network which provides information regarding an object included in the image or image section based on the human-interpretable concept information.

The proposed method is advantageous because due to the usage of a prefilter, which emphasizes photometric invariant features, the domain-dependency of the prediction performance of neural networks can be reduced. Thereby, it is possible, to use concept information also for debugging and assessing the prediction behavior of neural networks included in object detection systems processing images in automotive environments because the high variability of image information included in input images provided by a camera included in a vehicle (variable in the sense of contrast, illumination, color and/or Fresnel reflections) can be mitigated by the prefilter. In addition, the prefilter allows the neural network of the concept extractor unit to be trained by a training dataset of a different domain than the object detection unit. In other words, the prefilter allows a domain-invariant image processing and a domain shift when training the neural networks of the object detection system.

According to an embodiment, the neural networks of the concept extraction system and object detection system are trained neural networks which have been trained by different training datasets. More in detail, the neural network of the concept extraction system is trained using a training dataset with concept annotations outside the target domain and the neural network of the object detection system is trained using another training dataset which is inside the target domain. Thereby it is possible to use an available, densely labelled, object-related training dataset with concept annotations, which is not related to target domain, for training the concept extraction system and a training dataset including images of target domain for training the object detection system. The concept training data should be high-densely labeled, meaning that not only concepts needed for the final task are labeled, but also labels for further concepts are given. For example, for pedestrian detection not only labels for person localization are given, but also semantic segmentation labels for available body parts like head and leg. An example of such datasets would be Broden+ that was introduced with Unified Perceptual Parsing for Scene Understanding (Xiao, T., Liu Y., Zhou B., Jiang Y., Sun J.) (2018), Proceedings of the European Conference on Computer Vision (ECCV), p. 432-448.

According to an embodiment, the prefilter adapts scene geometry, Fresnel reflections, illumination intensity and/or illumination color of the image or image section such that the output image information comprises photometric invariant features which are independent of image recording conditions. Thereby, the prefilter emphasizes object features which enable a reliable object detection independent of the current image recording conditions.

According to an embodiment, the prefilter is a color-invariant edge detector. By using a prefilter which reduces color information and highlights edges of objects included in the image, the domain-dependency of prediction performance of the neural network of concept extraction system can be mitigated.

According to an embodiment, the prefilter is realized by one or more additional convolution layers included in the concept extractor unit or by a separate neural network. Thereby, the filtering behavior of the prefilter is adaptable to the required perception task. In addition, also the prefilter can be trained in order to achieve a desired filter behavior.

According to an embodiment, the concept extractor unit provides as an output a set of binary information or fuzzy truth information, each binary information or fuzzy truth information referring to an object attribute, the object attribute describing object characteristics of a detected object in natural language. An example for fuzzy truth information may be a decimal number. By using binary information or fuzzy truth information it is possible that the state of neurons of the final layer of the neural network of concept extractor unit can be directly used as concept information. Said final layer is also referred to as concept bottleneck layer. Said binary information or fuzzy truth information is representative for the object characteristics of the object, i.e. the binary information or fuzzy truth information can be transformed in human interpretable concept information which describes the object characteristics of the detected object in natural language. Thereby, the understandability and interpretability of the output of the concept extractor unit is significantly increased.

According to an embodiment, in case that the concept extractor unit receives an image comprising multiple objects, the concept extractor unit additionally provides information regarding the position and extent of a detected object in the image. The information may be, for example a mask that highlights where the concept can be found in the image. Thereby it is possible to understand for the user with which object a certain concept information is associated.

According to an embodiment, in case that the concept extractor unit receives an image comprising multiple objects, the concept extractor unit provides multiple sets of binary information or fuzzy truth information, each set of binary information or fuzzy truth information referring to a certain object included in the image, the set of binary information or fuzzy truth information providing information regarding a set of object attributes of the respective object. Thereby the concept extractor unit provides information regarding concepts realized in objects included in an image.

According to an embodiment, the object detection unit solely receives human-interpretable concept information and provides object detection information based on said human-interpretable concept information. Thereby it can be ensured that the object detection decisions are only taken based on information which are understandable for the human supervisor which enhances the effectivity of interventions during the training.

A computer program performing the method of the present invention may be stored on a computer-readable medium. A computer-readable medium may be a floppy disk, a hard disk, a CD, a DVD, an USB (Universal Serial Bus) storage device, a RAM (Random Access Memory), a ROM (Read Only Memory) or an EPROM (Erasable Programmable Read Only Memory).

A computer-readable medium may also be a data communication network, for example the Internet, which allows downloading a program code.

According to a further aspect, an object detection system is disclosed which comprises means for carrying out the steps of any of the preceding embodiments, i.e. the means are configured to carry out the steps of any of the preceding embodiments.

The methods, systems, and devices described herein may be implemented as software in a Digital Signal Processor, DSP, in a microcontroller or in any other processor, in a central processing unit, CPU, in a graphics processing unit, GPU or as a hardware circuit within an application specific integrated circuit, ASIC, a complex programmable logic device, CPLD or a field programmable gate array, FPGA.

According to yet a further aspect, a computer-implemented method for training a system for detecting objects in an image provided by a camera of a vehicle or in an image section of such image is disclosed. The object detection system comprises at least two artificial neural networks. The object detection system includes a concept extractor unit comprising a first artificial neural network and an object detection unit comprising a second artificial neural network.

The training method comprises the steps of:
At first, a first training dataset is provided. The first training dataset is a labeled object detection dataset comprising multiple images of single objects in scenes which are not automotive driving scenes. In other words, the first training dataset does not refer to the target domain of object detection system. The first training dataset comprises concept annotations to the object included in the respective image.

The images of the first training dataset are filtered using a prefilter. The prefilter adapts the images of the first training dataset in order to provide a prefiltered first training dataset which comprises images which are invariant with respect to image recording conditions. Preferably, the prefilter is configured to provide images in the prefiltered first training dataset in which photometric invariant features, specifically edges of an object included in the image, are emphasized in order to mitigate detection performance loss due to different color and/or different lighting conditions.

At least one concept extractor training step is performed for training the first artificial neural network of the concept extractor unit by adapting weights of the first artificial neural network using the prefiltered first training dataset. During said at least one concept extractor training step, the weights of the first artificial neural network are adapted such that the concept information provided by the concept extractor unit is changed towards the concept annotations included in the first training dataset.

In addition, a second training dataset is provided. The second training dataset is a labeled dataset comprising images of automotive driving scenes including one or more objects. In other words, the second training dataset refers to the target domain of object detection system. The labels of second training dataset may comprise classification information regarding the respective objects included in the images.

The images of the second training dataset are filtered using said prefilter. The prefilter adapts the images of the second training dataset in order to provide a prefiltered second training dataset which comprises images which are invariant with respect to image recording conditions. Preferably, the prefilter is configured to provide images in the prefiltered second training dataset in which photometric invariant features, specifically edges of an object included in the image, are emphasized in order to mitigate detection performance loss due to different color and/or different lighting conditions.

At least one object detection training step is performed for training the second artificial neural network of the object detection unit by adapting weights of the second artificial neural network using the prefiltered second training dataset. During said at least one object detection training step, the weights of the second artificial neural network are adapted such that the object information provided by the object detection unit changes towards the labels included in the second training dataset, whereas the weights of the first artificial neural network are kept constant.

The proposed training method is advantageous, because by using the prefilter, a domain shift between training and production mode is possible, i.e. the concept extractor unit can be trained using an available training dataset outside the target domain of the object detection system, said available training dataset being densely labelled and comprises concept annotations as labels, and in production mode, the concept extractor unit can process images within target domain without any further training steps. In other words, due to using the prefilter, domain independency is obtained.

According to an embodiment of the training method, the prefilter comprises adaptable filter weights to be adapted in a training phase, wherein the filter weights of the prefilter are trained together with the weights of the first artificial neural network of the concept extractor unit based on the first training dataset. Thereby it is possible to adapt the filter weights of the prefilter together with the weights of the neural network included in the concept extractor unit such that the concept information provided by the concept extractor unit changes towards the labels included in the first training dataset. Thereby the filter characteristics of the prefilter are improved towards providing domain-independent image information.

According to an embodiment, the training of the first and second artificial neural network is performed sequentially, namely first performing multiple concept extractor training steps in order to obtain a trained first artificial neural network and a trained prefilter, fixing the weights of the first artificial neural network and the trained prefilter and subsequently training the second artificial neural network of the object detection unit by performing multiple object detection training steps. Due to using the prefilter, such sequential training is possible, because due to its domain independency, the training state obtained by executing concept extractor training steps based on first training dataset which is outside target domain can be used also in the object detection training steps which use said second training dataset which is inside target domain.

According to an embodiment, the training of the first and second artificial neural network is performed alternatingly by iteratively alternating a concept extractor training step and an object detection training step, namely, first performing a concept extractor training step and adapting the weights of the first artificial neural network and the prefilter during said concept extractor training step, fixing the weights of the first artificial neural network and the trained prefilter, subsequently performing an object detection training step in order to train the second artificial neural network of the object detection unit and iterating the sequence of performing a concept extractor training step, fixing the weights of the first artificial neural network and the trained prefilter and performing an object detection training step. By alternating concept extractor training steps and object detection training steps, the prefilter and concept extractor unit as well as the object detection unit can be successively improved towards a final training result.

According to an embodiment, for training a system to be used for interpreting the output of a given object detector, the system receives a prefiltered image section including a spotted object from said given object detector and classification information to said spotted object from said given object detector as second training data set, wherein the system uses the classification information of said given object detector as ground truth information in the object detection training step. In other words, for training the object detection unit, the second training data set is used whereas for training the concept extractor unit, a first training data set is used which includes available object-related, high-densely labelled images outside the target domain of the object detection system (non-automotive scenario images). Thereby the object detection system can be trained to mimic the detection behavior of the given object detector and provide concept information to the detections of the given object detector. Based on the concept information provided by the concept extractor unit, the prediction behavior of the given object detector can be debugged and/or assessed because the object detection system including the concept extraction unit mimics the given object detector.

According to an embodiment, for training a system to be used for interpreting the output of a given object detector, the second training dataset includes classification information used as common ground truth information which has also been used for training an artificial neural network included in the given object detector. Thereby the system including the concept extraction unit is trained to provide a detection behavior similar to that of the given object detection system. Thereby it is possible to debug and/or assess the predictions of the given object detector by means of the concept information provided by the concept extraction unit.

The term "vehicle" as used in the present disclosure may refer to a car, truck, bus or any other crafts.

The term "concept" as used in the present disclosure refers to an object attribute describable in natural language, for example, a lexical synonym set as defined in the WordNet lexical database. Some typical concepts for determining a traffic participant may be "has four wheels?", "has two legs?", "has a trailer?". The set of concepts may be different for different object types, i.e. the object type "vehicle" may be associated with a different set of concepts than the object type "pedestrian".

The term "essentially" or "approximately" as used in the invention means deviations from the exact value by +/- 10%, preferably by +/- 5% and/or deviations in the form of changes that are insignificant for the function and/or for the traffic laws.

The various aspects of the invention, including its particular features and advantages, will be readily understood from the following detailed description and the accompanying drawings, in which:
Fig. 1 schematically illustrates an example structure of an object detection system configured to provide concept information for assessing the detection performance;
Fig. 2 shows the usage of the object detection system according to fig. 1 in a post-hoc-approach for adding explanations to object detections of a given object detector;
Fig. 3 shows the usage of the object detection system according to fig. 1 in an ante-hoc-approach;
Fig. 4 shows a schematic block diagram illustrating the steps of a method for detecting objects; and
Fig. 5 shows a schematic block diagram illustrating the steps of a method for training an object detection system according to Fig. 1.

The present invention will now be described more fully with reference to the accompanying drawings, in which example embodiments are shown. The embodiments in the figures may relate to preferred embodiments, while all elements and features described in connection with embodiments may be used, as far as appropriate, in combination with any other embodiment and feature as discussed herein, in particular related to any other embodiment discussed further above. However, this invention should not be construed as limited to the embodiments set forth herein. Throughout the following description similar reference numerals have been used to denote similar elements, parts, items or features, when applicable.

The features of the present invention disclosed in the specification, the claims, examples and/or the figures may both separately and in any combination thereof be material for realizing the invention in various forms thereof.

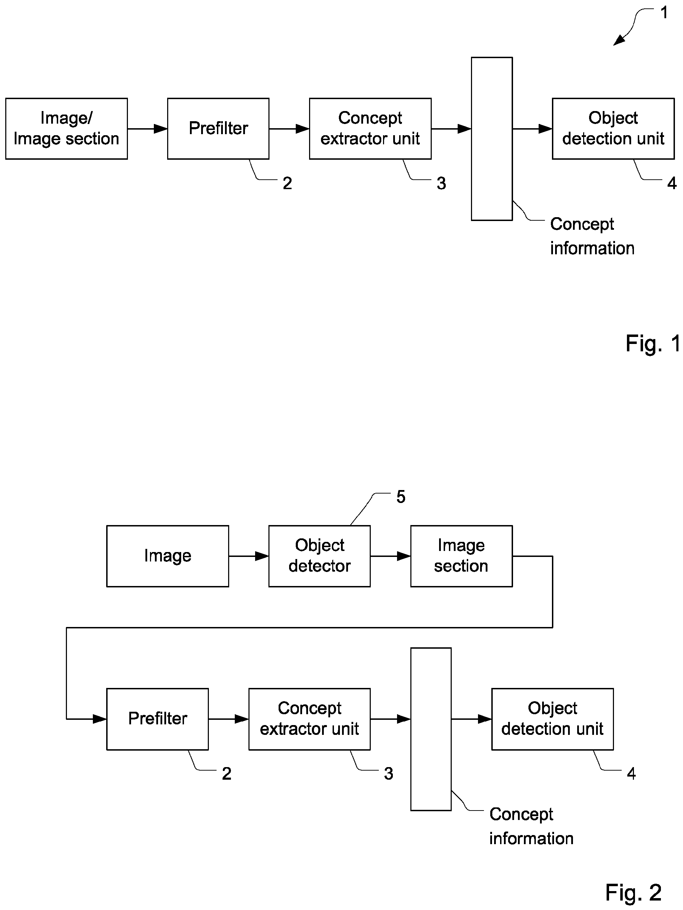

Fig. 1 shows a block diagram of a system 1 for detecting objects in an image or image section. More specifically, the system 1 may be configured to classify objects included in the image or image section. The system 1 comprises a prefilter 2 which receives the image or image section at its input. An image can be provided to the prefilter directly from a camera of a vehicle. Therefore, the image may comprise information regarding an automotive environment, specifically a traffic situation, surrounding the vehicle. Said automotive environment is the target domain of the object detection system 1 according to the present disclosure, i.e. in production phase, the system 1 should be enabled to detect objects in said automotive environment. Alternatively, an image or image section (e.g. one or more image crops) provided by an object detector of a vehicle may be provided to the prefilter 2 for further image processing. Also in this case, the target domain of the object detection system 1 is said automotive environment.

The output of the prefilter 2 is provided as an input to a concept extractor unit 3. The concept extractor unit 3 is configured to provide one or more sets of concept information as an output. Each set of concept information relates to an object included in the image or image section. The concept information contains information if a set of object attributes is fulfilled by the respective object.

The concept information is provided as an input to an object detection unit 4 which provides information regarding the object, specifically classifies the object based on said concept information.

The concept extractor unit 3 preferably comprises a neural network, specifically a convolutional deep neural network. For training the neural network in order to determine concept information, a densely labelled training dataset has to be available. Those densely labelled training data of automotive environment scenes, e.g. including high-level concepts like body part segmentations of passengers, are mostly not available. Creating such densely labelled training data of automotive environment scenes would take a lot of time and would therefore be very costly. However, object detection datasets are available which are outside the target domain (i.e. do not relate to automotive scenes) but comprise very dense labelling information and concept annotated classes (e.g. ADE20k (Zhou, Bolei, et al. "Scene parsing through ade20k dataset." Proceedings of the IEEE conference on computer vision and pattern recognition. 2017), Broden+ (Xiao, Tete, et al. "Unified perceptual parsing for scene understanding." Proceedings of the European conference on computer vision (ECCV). 2018)).

However, using a training dataset outside of the target domain, i.e. a training dataset which is not related to an automotive environment scene, for training a neural network often leads to a poor performance of the trained neural network when used for processing images in the target domain.

Using the prefilter 2 mitigates the problem of domain shift between training and inference by providing a domain-invariant representation of the received image or image section.

The prefilter 2 is configured to process the image information such that the output information is invariant with respect to image recoding conditions. More in detail, the prefilter 2 is configured to adapt scene geometry, Fresnel reflections, illumination intensity and/or illumination color of the image or image section such that the output image information comprises photometric invariant features which are independent of image recording conditions. Specifically, the prefilter 2 may be configured to detect edges in the image and provide a modified image which is colour- and/or light-invariant and highlights the edges of the objects included in the image. By prefiltering the image or image sections before providing to the concept extractor unit 3, it is possible to use training data for training the concept extractor unit 3 outside the target domain of the object detection system 1, thereby obtaining a trained concept extractor unit 3 which also provides high prediction performance within target domain.

The prefilter 2 may be realized by one or more convolutional layers, specifically one or more additional convolutional layers included in the dense neural network of the concept extractor unit 3 or may be realized by a separate neural network which is trained to output a domain-invariant representation of the image or image section.

The concept extractor unit 3 receives the domain-invariant representation of the image or image section in order to provide concept information to one or more objects included in the image or image section.

In case that the concept extractor unit 3 receives an image or image section including multiple objects, the concept extractor unit 3 may be configured to detect the objects in the image or image section in order to process the objects separately and provide concept information for each object. Therefore, in case that the image or image section includes multiple objects, the concept extractor unit 3 outputs multiple concept information wherein each concept information refers to a distinct object included in the image or image section.

Each concept information includes a set of object attributes of the respective object. The object attributes are human-interpretable information in form of a description in natural language (e.g. has two legs?, wears a bag?, is walking?). The information being output by the concept extractor unit 3 may be a binary information (0 or 1) referring to an object attribute (e.g. has two legs?). The binary information may be provided by a neuron of the neural network of the concept extractor unit 3. Therefore, the binary information associated with the object attribute provides an answer to the object attribute (e.g. "0" means that the object has not two legs and "1" means that the object has two legs). According to other embodiments, the information being output by the concept extractor unit 3 may be fuzzy truth information, e.g. a decimal number.

Due to the understandability of concept information for a human, during the training phase, it is possible to recognize which concepts have already been learned by the neural network, determine learning gaps or misunderstandings and enforce concept learning depending on existing learning gaps. In addition, during inference, the concept information allows to assess which concepts were found by the concept extractor unit 3 and intervene with those findings.

Thereby, the proposed system provides means for debugging, assessing, and correcting the neural network included in the concept extractor unit 3.

The concept information is provided at an output interface. Preferably, the provided information is directly understandable for the human reader. For example, the concept information comprises multiple questions or sentences and answers to said questions (e.g. does the object has two legs: yes). The provided concept information is dependent on the type of object which was found in the image or image section. I.e. the object attributes for the object type "vehicle" may be different to the object attributes for the object type "passenger". In case that the image or image section comprises multiple objects, the concept information may additionally comprise information where the concept can be found in the image or image section.

The object detection unit 4 of the system 1 receives said concept information in a digital format and provides object information to said object based on the concept information associated with the object. Preferably, the object detection unit 4 provides object information solely based on said concept information, i.e. the object detection unit 4 takes only concept information and no further information into account for providing object information. The object information may be object classification information.

Fig. 2 shows a first application case of the system 1, namely a post hoc approach for analysing the detection behaviour of a given object detector based on the system 1 according to Fig. 1. This approach is called post-hoc-approach, i.e. the system 1 tries to imitate the detection behaviour of a given object detector.

In the post-hoc-approach, the input of the system 1 is coupled with a given object detector 5. Therefore, the system 1 does not directly receive images of a camera of the vehicle but pre-processed image information for the given object detector 5. Preferably, the system 1 may receive one or more image crops from the given object detector 5, each image crop comprising an object. The image crop may be a part of a greater image which is marked by a bounding box. The bounding box may be created by the given object detector 5 for highlighting the region in which a certain object has been found. The given object detector 5 may additionally provide object classification information to the object included in the bounding box. The given object detector 5 may be a trained object detector which does not provide any information regarding learning status, i.e. why certain objects are mis-detected or mis-classified.

In order to - a posteriori - debug and/or assess the predictions of the given object detector 5, the object detection system 1 may be trained to mimic the detection behaviour of the given object detector 5 by using the detection results of the given object detector 5 as training goal. Alternatively, the system 1 may be trained to reach detection results of a given ground truth which has also been used for training the given object detector 5.

The aim of usage of the object detection system 1 is to associate -post-hoc- explanations to predictions of an already trained object detector 5. Based on the concept information provided by the object detection system 1 it is possible to enrich the output of a given object detector 5 by intervenable explanations in order to enable a debugging and assessment of detection decisions.

As a result, the system 1 shown in Fig. 1 may, for example, provide concept explanations to the object detections provided by the given object detector 5.

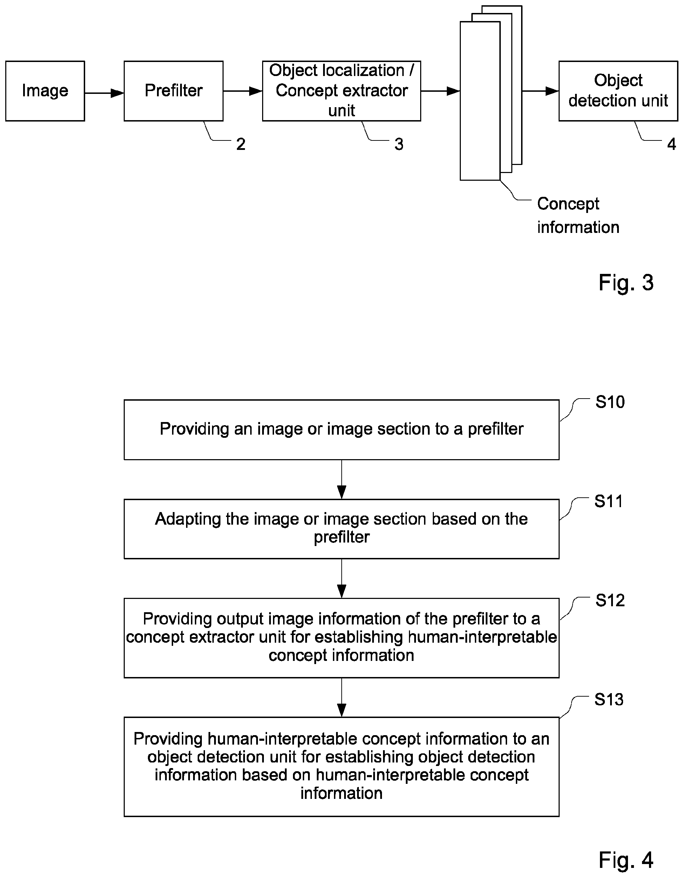

Fig. 3 shows a second application case of the object detection system 1, namely an object detection system 1 configured detect objects in an image without a pre-detection by a given object detector 5. This application case is called ante-hoc-approach, i.e. the object detection system 1 has the functionality of an object detector which is configured to detect objects in the image and provide object information to the detected objects which include object classification information and, in addition, human-interpretable concept information which can be used for debugging, assessment and intervention purposes, because based on the concept information, the human user can understand why the neural network included in the system 1 has taken a detection decision.

In the following, only the differences of system 1 implementing ante-hoc approach compared to the system of Fig. 2 which implements post-hoc-approach are explained. Otherwise, the previous explanations regarding the post-hoc-approach also apply to the ante-hoc-approach according to Fig. 3.

The main difference between the object detection system according to Fig. 3 compared to the object detection system according to Fig. 2 is that the prefilter 2 directly receives images from a camera of the vehicle, i.e. not indirectly via a given object detector 5 which already preselects objects. The output image information of the prefilter 2 is provided to the concept extractor unit 3 which additionally localizes objects in the output image information of the prefilter 2. In other words, the concept extractor unit 3 also provides capabilities for recognizing one or more objects in the image. For each of the recognized objects, concept information is provided which comprises a set of object attributes which characterize the respective object. In addition, the concept extractor unit 3 may additionally provide localization information, where the respective object can be found in the image. Said localization information may be, for example, a mask which highlights the region, where the concept can be found in the image.

The concept information associated with each object is provided to the object detection unit 4 which provides object information based on said concept information. In case that multiple objects are detected, the concept extractor unit 3 provides multiple concept information, each concept information referring to a certain detected object. As mentioned before, the object detection unit 4 may classify the respective object based on concept information associated with the object.

Fig. 4 shows a flow chart which illustrates the steps of a computer-implemented method for detecting an object in an image provided by a camera of a vehicle or an image section of such image.

At first, an image of a camera of a vehicle or image section of such image is provided to a prefilter (S10).

The prefilter adapts image information included in the image or image section in order to provide output image information which is invariant with respect to image recording conditions (S11).

The output image information of the prefilter is provided to a concept extractor unit. The concept extractor unit is an artificial neural network establishing human-interpretable concept information of an object included in output image information. The human-interpretable concept information comprises information if a set of object attributes is fulfilled by the object (S12).

Finally, human-interpretable concept information is provided to an object detection unit. The object detection unit comprises an artificial neural network which provides information regarding an object included in the image or image section based on said human-interpretable concept information (S13).

In the following, a method for training an object detection system 1 according to the above-mentioned embodiments is described.

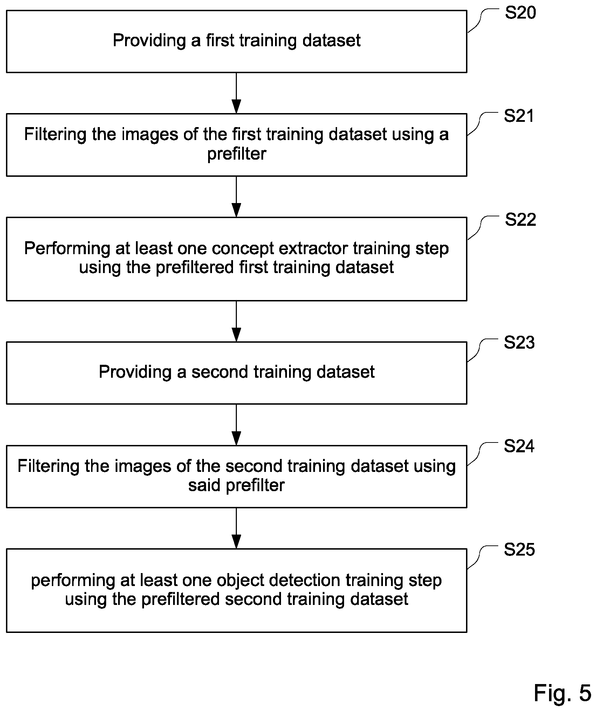

Fig. 5 shows a flow chart which illustrates the steps of a computer-implemented method for training a system for detecting objects in an image provided by a camera of a vehicle or in an image section of such image using at least two artificial neural networks. The system includes a concept extractor unit 3 which comprises a first artificial neural network and an object detection unit 4 which comprises a second artificial neural network.

At first, a first training dataset is provided. The first training dataset is a labeled object detection dataset comprising multiple images of single objects in scenes which are not automotive driving scenes (S20). In other words, the artificial neural network of the concept extractor unit 3 is trained by images including an object which is not embedded in a traffic scene but on a object detection dataset, which comprises images showing one or more objects in a domain different to automotive driving scene. Specifically, the artificial neural network of the concept extractor unit 3 is not trained based on labelled images captured by a camera of a vehicle driving through a certain traffic scenario. For example, the first training dataset may be a dataset with concept-annotated classes, for example extracted from datasets like ADE20k or Broden+. The first training dataset may be obtained from an available object-related dataset like ADE20k or Broden+ by selecting classes which are related to objects appearing in automotive driving scenes like cars, trucks, busses, pedestrians, cyclists etc.

Subsequently, the images of the first training dataset are filtered using the prefilter 2. The prefilter 2 adapts the images of the first training dataset in order to provide a prefiltered first training dataset which comprises images which are invariant with respect to image recording conditions (S21). As mentioned before, the prefilter 2 adapts image information included in the image of first training dataset such that the output image information of the prefilter 2 emphasizes photometric invariant features of the object included in the image, thereby reducing the effects of illumination, colour, scene geometry and/or Fresnel reflections. In particular, the prefilter 2 may be a colour-invariant edge detector.

The prefiltered first training dataset is then used in at least one concept extractor training step for training the first artificial neural network of the concept extractor unit 3, i.e. the weights of the first artificial neural network are adapted by using the prefiltered first training dataset and the labels associated with the first training dataset (S22). The first training dataset may be a densely labelled training dataset which includes labels not only referring to the whole object but also concept annotations which may refer to object characteristics of a portion of the object. Thereby, the first artificial neural network can be trained to provide concept information to the object included in the image information.

In addition, a second training dataset is provided. The second training dataset is a labeled dataset comprising images of automotive driving scenes including one or more objects (S23). In other words, the second training dataset refers to another domain than the first training dataset, namely includes images of automobile driving scenarios which may be captured by a camera installed in a vehicle. The labelling density of the second training dataset is lower than the labelling density of the second training dataset. Specifically, the second training dataset does not comprise concept annotations for characterizing certain sub-details of an object included in the image.

Subsequently, the images of the second training dataset are also filtered using said prefilter 2. The prefilter 2 is configured to adapt the images of the second training dataset in order to provide a prefiltered second training dataset which comprises images which are invariant with respect to image recording conditions (S24). The prefilter adapts the image information included in the images of the second training dataset as mentioned before, i.e. the prefilter 2 emphasizes photometric invariant features of one or more objects included in the respective image, thereby reducing the effects of illumination, colour, scene geometry and/or Fresnel reflections.

Finally, at least one object detection training step for training the second artificial neural network of the object detection unit 4. During said object detection training step the weights of the second artificial neural network are adapted using the prefiltered second training dataset. During said object detection training step, the weights of the first artificial neural network are kept constant (S25).

So, the training of the object detection system 1 is realized by a multidataset training scheme, i.e. the first and second neural network are trained by different datasets which comprise images of different domains, namely, the first neural network is trained by a first dataset comprising images with concept-annotations which do not comprise a driving situation scenery and the second neural network is trained by a dataset comprising images without concept-annotations but captured in a driving situation.

The prefilter 2 may comprise one or more convolutional layers or may comprise a further neural network with adaptable filter weights. Thereby the filter characteristics of the prefilter 2 can be modified in order to obtain an improved domain independency which allows the usage of training datasets of different domains for training the first neural network of concept extractor unit 3 and second neural network of object detection unit 4.

The training of the adaptable filter weights of the prefilter 2 can be performed simultaneously with the training of the first neural network of concept extractor unit 3. As mentioned before, the first training dataset used for training the first neural network of concept extractor unit 3 comprises concept annotations as labels. By using the concept annotations as ground truth, the weights of the first neural network of concept extractor unit 3 and the filter weights of the prefilter 2 can be iteratively adapted such that the predictions of the concept extractor unit 3 increasingly match the concept annotations included in the first training dataset. The training can be performed using training techniques like backpropagation etc.

After finishing the training of the concept extractor unit 3 and, preferably also the prefilter 2, the weights of the concept extractor unit 3 and the prefilter may be fixed and the object detection unit 4 is trained using the second training dataset. The images of the second training dataset are provided to the prefilter 2 and, after passing the prefilter 2, to the concept extractor unit 3 in order to obtain concept information to one or more objects included in the respective image. Said concept information is used as input for the second neural network of the object detection unit 4 in order to provide object information based on said concept information of the object. Thereby, the labels of second training dataset are used as ground truth. The weights of the second neural network are iteratively adapted such that the predictions of the object detection unit 4 increasingly match the concept annotations included in the second training dataset. The training can be performed using training techniques like backpropagation etc.

The training using the first and second training dataset can be performed in different ways, wherein in each way, the concept extractor unit 3 and the object detection unit 4 are trained separately, i.e. the weights of concept extractor unit 3 are kept fixed when training the object detection unit 4 using second training dataset.

According to a first embodiment, the concept extractor unit 3 and the object detection unit 4 are trained sequentially, namely after finalizing the training of the concept extractor unit 3, the object detection unit 4 is trained, as mentioned before.

According to a second embodiment, the concept extractor unit 3 and the object detection unit 4 are trained jointly, wherein the training of the concept extractor unit 3 and the object detection unit 4 is alternated. Also in the second embodiment, the weights of the concept extractor unit 3 are kept constant when the second neural network of object detection unit 4 is trained using second training dataset.

When training the object detection unit 4 of the object detection system 1 to be used according to post-hoc-approach, the second training dataset may comprise labels according to the predictions of the given object detector 5. Thereby, the object detection system 1 is trained to mimic the prediction behaviour of the given object detector 5, i.e. due to the training of the object detection system 1, the prediction behaviour of object detection system 1 approaches the prediction behaviour of the given object detector 5. Alternatively, the object detection unit 4 of the object detection system 1 may be trained based on a second training dataset which equals the training dataset based on which the given object detector 5 has been trained.

In both cases, after finishing the training, the object detection system 1 may provide predictions similar to the prediction of the given object detector 5. Thereby it is possible to use the concept information provided by the concept extractor unit 3 of the object detection system 1 for debugging and/or assessing the prediction behaviour of the given object detector 5.

It should be noted that the description and drawings merely illustrate the principles of the proposed invention. Those skilled in the art will be able to implement various arrangements that, although not explicitly described or shown herein, embody the principles of the invention.

### List of reference numerals

- 1: Object detection system
- 2: Prefilter
- 3: Concept extractor unit
- 4: Object detection unit
- 5: Object detector

## Claims

1. Computer-implemented method for detecting an object in an image provided by a camera of a vehicle or in an image section of such image using an artificial neural network, the method comprising the steps of:
- Providing an image of a camera of a vehicle or an image section of such image to a prefilter (2) (S10), the prefilter (2) adapting image information included in the image or image section in order to provide output image information which is invariant with respect to image recording conditions (S11);
- Providing output image information of the prefilter (2) to a concept extractor unit (3), the concept extractor unit (3) including an artificial neural network which establishes human-interpretable concept information of an object included in output image information, wherein the human-interpretable concept information comprises information if a set of object attributes is fulfilled by the object (S12);
- Providing human-interpretable concept information to an object detection unit (4), the object detection unit (4) including an artificial neural network which provides information regarding an object included in the image or image section based on human-interpretable concept information (S13).

2. Method according to claim 1, wherein the prefilter (2) adapts scene geometry, Fresnel reflections, illumination intensity and/or illumination color of the image or image section such that the output image information comprises photometric invariant features which are independent of image recording conditions.

3. Method according to claim 1 or 2, wherein the prefilter (2) is a color-invariant edge detector.

4. Method according to any one of the preceding claims, wherein the prefilter (2) is realized by one or more additional convolution layers included in the concept extractor unit (3) or by a separate neural network.

5. Method according to any one of the preceding claims, wherein the concept extractor unit (3) provides as an output a set of binary information or fuzzy truth information, each binary information or fuzzy truth information referring to an object attribute, the object attribute describing object characteristics of a detected object in natural language.

6. Method according to claim 5, wherein in case that the concept extractor unit (3) receives an image comprising multiple objects, the concept extractor unit (3) additionally provides information regarding the position and extent of an detected object in the image.

7. Method according to claim 5 or 6, wherein in case that the concept extractor unit (3) receives an image comprising multiple objects, the concept extractor unit (3) provides multiple sets of binary information or fuzzy truth information, each set of binary information or fuzzy truth information referring to a certain object included in the image, the set of binary information providing information regarding a set of object attributes of the respective object.

8. Method according to any one of the preceding claims, wherein the object detection unit (4) solely receives human-interpretable concept information and provides object detection information based on said human-interpretable concept information.

9. Object detection system comprising means for carrying out the steps of any of the preceding claims.

10. Computer-implemented method for training a system (1) for detecting objects in an image provided by a camera of a vehicle or in an image section of such image using at least two artificial neural networks, wherein the system includes a concept extractor unit (3) comprising a first artificial neural network and an object detection unit (4) comprising a second artificial neural network, the method comprising the steps of:
- providing a first training dataset, the first training dataset being a labeled object detection dataset comprising multiple images of single objects in scenes which are not automotive driving scenes (S20);
- filtering the images of the first training dataset using a prefilter (2), the prefilter (2) adapting the images of the first training dataset in order to provide a prefiltered first training dataset which comprises images which are invariant with respect to image recording conditions (S21);
- performing at least one concept extractor training step for training the first artificial neural network of the concept extractor unit (3) by adapting weights of the first artificial neural network using the prefiltered first training dataset (S22);
- providing a second training dataset, the second training dataset being a labeled dataset comprising images of automotive driving scenes including one or more objects (S23);
- filtering the images of the second training dataset using said prefilter (2), the prefilter (2) being configured to adapt the images of the second training dataset in order to provide a prefiltered second training dataset which comprises images which are invariant with respect to image recording conditions (S24);
- performing at least one object detection training step for training the second artificial neural network of the object detection unit (4) by adapting weights of the second artificial neural network using the prefiltered second training dataset wherein during said object detection training step, the weights of the first artificial neural network are kept constant (S25).

11. Method according to claim 10, wherein the prefilter (2) comprises adaptable filter weights to be adapted in a training phase, wherein the filter weights of the prefilter (2) are trained together with the weights of the first artificial neural network of the concept extractor unit (3) based on the first training dataset.

12. Method according to claim 10 or 11, wherein the training of the first and second artificial neural network is performed sequentially, namely first performing multiple concept extractor training steps in order to obtain a trained first artificial neural network and a trained prefilter (2), fixing the weights of the first artificial neural network and the trained prefilter (2) and subsequently training the second artificial neural network of the object detection unit (4) by performing multiple object detection training steps.

13. Method according to claim 10 or 11, wherein the training of the first and second artificial neural network is performed alternatingly by iteratively alternating a concept extractor training step and an object detection training step, namely, first performing a concept extractor training step and adapting the weights of the first artificial neural network and the prefilter (2) during said concept extractor training step, fixing the weights of the first artificial neural network and the trained prefilter, subsequently performing an object detection training step in order to train the second artificial neural network of the object detection unit (4) and iterating the sequence of performing a concept extractor training step, fixing the weights of the first artificial neural network and the trained prefilter and performing an object detection training step.

14. Method according to any of the claims 10 to 13, wherein, for training a system (1) to be used for interpreting the output of a given object detector (5), the system receives a prefiltered image section including an spotted object from said given object detector (5) and classification information to said spotted object from said given object detector (5) as second training data set, wherein the system (1) uses the classification information of said given object detector (5) as ground truth information in the object detection training step.

15. Method according to any of the claims 10 to 13, wherein, for training a system (1) to be used for interpreting the output of a given object detector (5), the second training dataset includes classification information used as common ground truth information which has also been used for training an artificial neural network included in the given object detector (5).
